# FASCICULE DE BREVET EUROPEEN

(11) **EP 2 741 554 B1**
(45) Date de publication et mention de la délivrance du brevet: **29.08.2018**
(21) Numéro de dépôt: 13194699.8
(22) Date de dépôt: 27.11.2013
(51) Int. Cl.: H04W 60/00, H04W 8/20, H04W 48/18

(54) **Système de contre-mesure aux systèmes de pilotage d'itinérance**
Gegenmaßnahmesystem für Systeme zur Steuerung von Roaming
Countermeasure system for roaming control systems

(30) Priorité: 07.12.2012 FR 1261791
(43) Date de publication de la demande: 11.06.2014
(73) Titulaire: Halys, 75015 Paris (FR)
(72) Inventeur: Mathian, Benoît, 92100 Boulogne Billancourt (FR); Henry-Labordere, Arnaud, 75007 PARIS (FR)
(74) Mandataire: Cabinet HERRBURGER

(56) Documents cités:
- EP-A1- 1 662 831
- WO-A2-2004/014101
- US-A1- 2009 312 015
- US-A1- 2011 263 249
- US-A1- 2012 157 092

## Description

### Domaine de l'invention

La présente invention se rapporte à un système de contre-mesure sans répétition des messages Update Location aux systèmes de pilotage des réseaux visités par les mobiles, basés sur l'utilisation d'une plateforme de pilotage d'itinérance installée en parallèle au registre HLR et recevant tous les deux le message d'un mobile du réseau en itinérance dans un autre réseau, pour diriger un mobile en itinérance vers un réseau partenaire choisi par l'opérateur du réseau du mobile en itinérance,
- la plateforme de pilotage d'itinérance retournant un message d'erreur vers le réseau visité en réponse à une demande de profil du mobile en itinérance, émise par le réseau visité.

De nombreux opérateurs de mobile disposent actuellement d'un système destiné à favoriser le choix de réseaux visités moins chers par leurs abonnés lors d'un voyage à l'étranger (« pilotage de l'itinérance »), notamment pour favoriser des réseaux partenaires avec tarifs préférentiels. Le choix est au détriment des opérateurs écartés qui ont intérêt à mettre en place une « contre-mesure » pour annuler l'action du pilotage de l'itinérance et faire revenir le visiteur sur leur réseau,

### Etat de la technique

Selon la pratique dans le domaine de la téléphonie mobile, les messages de signalisation échangés sont présentés de manière descriptive selon leur désignation en anglais technique dont il n'existe pas de traduction et qui est usuelle pour l'homme du métier.

Cette pratique sera utilisée ci-après tant pour l'exposé de l'état de la technique que pour la description de l'invention.

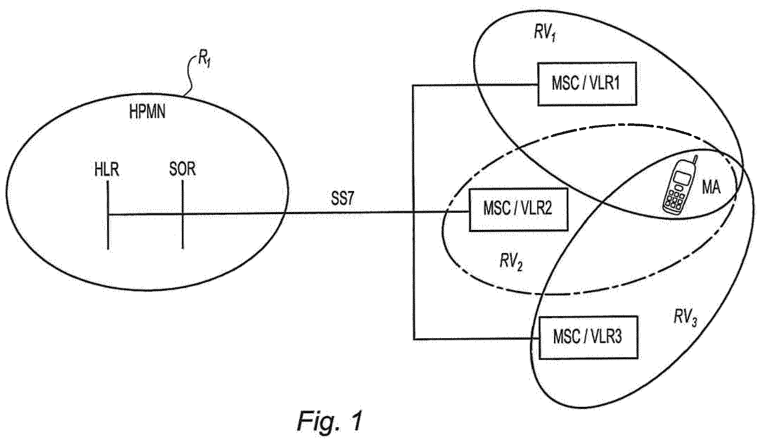

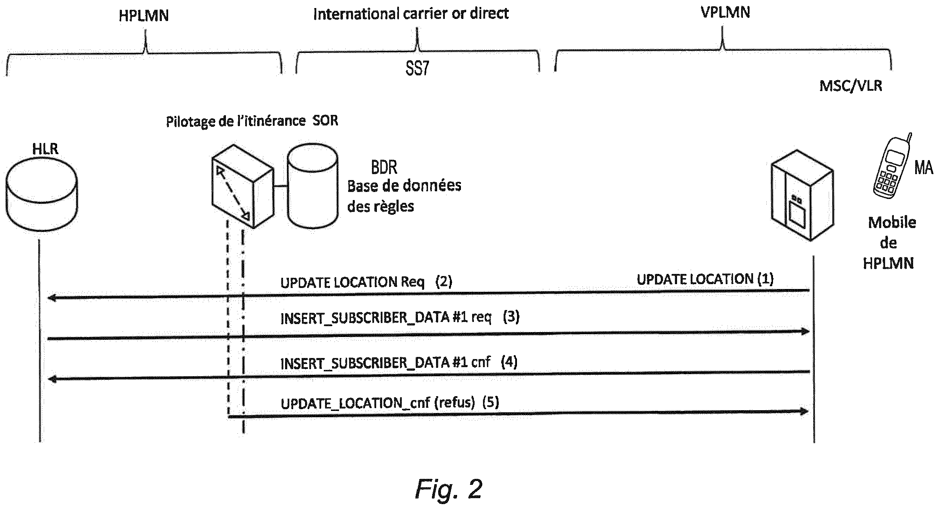

L'état de la technique est représenté aux figures 1 et 2 montrant un mobile MA abonné du réseau R1 (HPMN) en itinérance à l'extérieur de son réseau R1.

Le profil du mobile MA est enregistré dans le registre HLR de son réseau. Lorsqu'il est à l'extérieur de son réseau, c'est-à-dire en itinérance, le mobile MA doit passer par un autre réseau à sa portée pour les services de téléphonie ou de transmission de messages. Suivant la terminologie utilisée, le ou les réseaux dans lequel(lesquels) se trouve un mobile MA en dehors de son propre réseau sont des réseaux visités désignés par l'acronyme VLMN. A l'endroit où il se trouve, le mobile MA reçoit les signaux de repérage émis par les réseaux RV1, RV2, RV3 à sa portée et automatiquement, le mobile MA choisit le réseau qui offre la meilleure liaison radio.

Le réseau auquel le mobile MA s'adresse, qui est un réseau visité VLMN, porte ici la référence RV1. Ce réseau visité RV1 interroge l'opérateur du réseau d'origine R1 du mobile pour connaître le profil du mobile MA et les services auxquels il a droit.

Le réseau d'origine R1 (HPMN) reçoit cette demande de profil et répond en fournissant le profil MA inscrit dans son registre HLR. Les échanges de signaux entre les deux opérateurs ou réseaux se font par le réseau de liaison SS7. Le mobile MA est ensuite enregistré dans le registre VLR1 du réseau visité (VPMN) RV1.

Lorsque les formalités d'identification et d'inscription du mobile MA dans le réseau visité VR1 sont terminées, la liaison est établie et le mobile MA peut appeler ou envoyer des messages.

Cette organisation suppose un accord entre le réseau visité VR1 et le réseau d'origine R1 (HPMN). Ces accords de préférence existent entre certains opérateurs mais tous les opérateurs ne sont pas tous liés entre eux.

Le réseau d'origine R1 du mobile MA a par exemple un accord privilégié avec l'opérateur du réseau RV1 (réseau partenaire) et il cherchera à imposer ce réseau RV1 à ses mobiles MA en itinérance dans la zone d'activité du réseau RV1 qui, en général, partage des zones géographiques d'activité avec d'autres réseaux tels que RV2, RV3.

La difficulté de cette situation est que le mobile MA peut, dans sa recherche d'un réseau à visiter, choisir d'abord le réseau RV2, par exemple parce que la liaison radio est meilleure que celle des autres réseaux visités et en particulier le réseau RV1. La communication du mobile MA se fera donc par ce réseau RV2 et non par le réseau RV1 que souhaiterait l'opérateur R1.

Pour éviter un tel choix et imposer un opérateur partenaire, le réseau R1 est équipé d'une plateforme de pilotage d'itinérance SOR pour gérer les mobiles MA en itinérance. Une telle plateforme SOR à l'entrée du réseau R1 est en amont de son registre HLR et reçoit les demandes de profil émanant d'un réseau visité RV_{N}. Il vérifie si le réseau visité demandeur fait partie des réseaux partenaires. Dans la négative, la plateforme SOR intervient et selon qu'elle est installée en coupure, elle ne transmet pas la demande au registre HLR pour que celui-ci ne transmette pas le profil du mobile MA ou si la plateforme SOR détecte simplement les demandes, elle intervient dans le dialogue entre les deux réseaux R1/RV et transmet en réponse simplement un message d'erreur, de façon à terminer la session avec le réseau visité RV2. Le mobile MA est alors obligé de visiter un autre réseau RV3 qui, s'il n'est pas non plus le réseau partenaire, recevra le même traitement de refus de la plateforme SOR. Ce n'est que lorsque le mobile MA visitera le réseau partenaire RV1 que la plateforme de pilotage d'itinérance SOR n'enverra pas de message d'erreur en retour et le registre HLR répondra à la requête de profil par l'envoi du profil de l'abonné MA au réseau RV1 et permettra au mobile MA de communiquer.

La figure 2 montre de façon plus détaillée le dialogue initial entre le réseau visité RV1 et le réseau R1 du mobile MA. Lorsque le mobile MA visite un réseau étranger VPLMN, le commutateur MSC visité envoie vers le registre HLR du réseau HPLMN du mobile un message « MAP UPDATE LOCATION req. » (abrégé UL) pour obtenir le profil de l'abonné MA. La plateforme de pilotage d'itinérance SOR voit le réseau visité dans la tentative par l'appellation globale GT du commutateur MSC visité. Si ce n'est pas un réseau partenaire, il renvoie un code d'erreur (typiquement 35 ou 36) qui ne fait pas partie des erreurs dans ce contexte d'UPDTATE LOCATION. Le mobile MA essaie alors un autre réseau jusqu'à ce que le choix corresponde au réseau partenaire RV1 du réseau HPLMN de l'abonné MA.

Comme déjà indiqué, il y a 2 types de réalisation du système de pilotage d'itinérance :
- Le pilotage par coupure sur les liaisons de signalisation internationales (SS7). La plateforme de pilotage de l'itinérance SOR reçoit le message UL et le refuse s'il ne provient pas d'un opérateur partenaire du réseau 1 inscrit dans sa base de données ; le message n'est pas transmis au registre HLR du réseau R1 et le réseau visité ne reçoit pas de message en retour, de sorte que le mobile MA cherche un autre opérateur visité.
- Le pilotage « passif » le plus répandu, utilise des sondes ou tout moyen de capture comme une duplication de trafic de sorte que le message UL est reçu à la fois par le registre HLR du réseau R1 et par la plateforme de pilotage d'itinérance SOR. La plateforme SOR répond en général instantanément, plus vite que le registre HLR qui doit envoyer le profil de l'abonné ce qui prend plusieurs secondes. La plateforme SOR bloque, en répondant par le message « MAP UPDATE LOCATION cnf » au registre VLR du réseau visité avec un code d'erreur 35 ou 36 ou autre dans une transaction TCAP END qui ferme le dialogue. Le profil du mobile MA qui est alors envoyé par le registre HLR puis le message « MAP UPDATE LOCATION cnf » arrive alors que la transaction est déjà fermée dans le réseau visité. Même si le dialogue a commencé et que le registre HLR du réseau R1 a déjà envoyé des informations, la plateforme SOR interviendra dans le dialogue par son message d'erreur qui, chez l'opérateur visité, clôture le dialogue avant que le registre HLR n'ait pu envoyer toutes les informations concernant le mobile MA. Puis le mobile MA commence à rechercher un autre réseau. Cette méthode passive est répandue, et intrinsèquement robuste puisqu'à la différence des systèmes en coupure, une panne de la plateforme de pilotage de l'itinérance n'entraine pas l'arrêt de la fonction d'itinérance.

Le document US 2012/0157092 décrit un système de détection de contre-mesure consistant à répéter des messages MAP UPDATE LOCATION jusqu'à ce que le réseau du mobile accepte le réseau visité par un mobile.

Ce document ne décrit pas un système pas un système de contre-mesure mais un système de détection d'anti-steering.

On connaît selon le document US 2011/263249 A1 Huawei un système destiné à réaliser un local roaming number pour des cartes Sim qui n'ont pas d'accord de roaming avec le VPLM. Mais ce système ne fonctionne pas, sauf si l'on supprime toutes les règles d'authentification qui font la sécurité du GSM. Cette solution n'a aucun intérêt pratique et il est dans la lignée des idées de « roaming sans carte Sim ».

On connaît également le document WO 2004/014101 A2 ROAMWARE : ce document ne décrit pas un système de contre-mesure mais un pur système de pilotage, c'est-à-dire de redirection du trafic et non pas une contre-mesure à la redirection du trafic.

Le document US 2009/0312015 A1 T-Mobile International décrit un système de contre-mesure par répétition des demandes UL, ce qui est contraire aux règles de la GSMa.

Le document EP 1 662 831 A1 Orange décrit un système de contre-mesure basé sur l'emploi d'un GLR qui simule la réponse du HPLMN. La solution décrite à ce document consiste à répéter les demandes UL, ce qui est contraire aux règles de la GSMa.

### But de l'invention

La présente invention a pour but de développer un moyen simple permettant à un réseau visité de s'opposer au pilotage d'itinérance que voudrait imposer l'opérateur d'un mobile en itinérance.

### Exposé et avantages de l'invention

L'invention est décrite dans l'ensemble des revendications jointes en annexe. Les représentations et/ou exemples de la description suivante qui ne sont pas couverts par les revendications jointes en annexe sont considérés comme ne faisant pas partie de la présente invention.

### Dessins

La présente invention sera décrite ci-après de manière plus détaillée à l'aide d'un système de contre-mesure schématisé dans les dessins annexés dans lesquels :
- la figure 1 montre le contexte général dans lequel s'inscrit une plateforme de pilotage d'itinérance que l'invention se propose de contrecarrer,
- la figure 2 est un schéma de l'activité d'un système de pilotage d'itinérance selon l'état de la technique,
- la figure 3 est un schéma du dialogue entre un mobile en itinérance et son réseau dans le cas d'un réseau visité équipé d'un système de contre-mesure,
- la figure 4 montre l'architecture couche basse du système de contre-mesure selon l'invention,
- la figure 5 montre l'architecture couche haute du système de contre-mesure selon l'invention.

### Description de modes de réalisation de l'invention

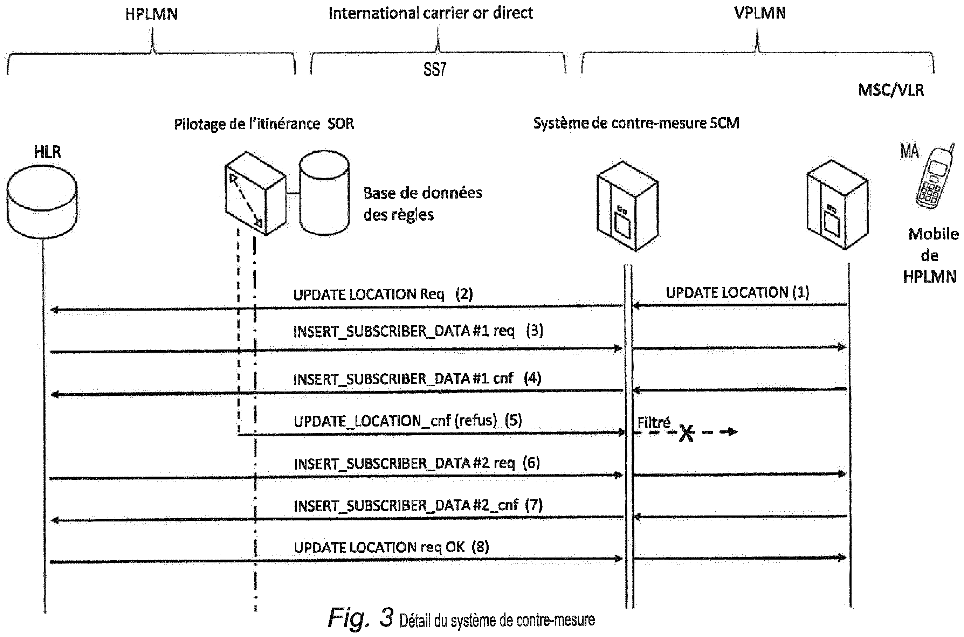

La figure 3 représente le fonctionnement général d'un système de contre-mesure SCM selon l'invention installé chez un opérateur de réseau R2 pour contrecarrer les systèmes de pilotage de l'itinérance (SOR) par les réseaux R1 des abonnés MA qui visitent le réseau R2 (VPLMN).

Le système SCM peut aussi faire partie du pilote d'itinérance virtuel (roaming hub) d'un opérateur de transit de signalisation SS7 qui offrirait à certains clients opérateurs le service de pilotage d'itinérance, et à d'autres ou aux mêmes, le système de contre-mesure.

Le système SCM est installé en coupure sur les liaisons internationales (SS7) de l'opérateur du réseau VR2 (VPLMN) qui, dans cet exemple, est le réseau visité par le mobile MA. Le pilotage SOR du réseau R1 du mobile MA est en observation passive des liens internationaux dans le réseau R1 (HPLMN). Le système SCM peut avantageusement avoir aussi la fonction d'envoi des messages SMS aux visiteurs et aux abonnés en voyage.

Le mobile MA abonnné du réseau R1 (HPLMN) tente de s'enregistrer dans le réseau visité VR2 (VLMPN). Le commutateur MSC/VLR du réseau visité VR2 déclenche un message (UL) « MAP UPDATE_LOCA-TION_req » (1) qui traverse le système SCM ; il est observé par le système de pilotage SOR du réseau R1 en même temps qu'il atteint le registre HLR de ce réseau R1. Ce message UL est contenu dans une transaction TCAP de type BEGIN,

Deux cas se présentent :
- le système de pilotage SOR accepte le réseau visité R1 (VPLMN), il n'intervient pas ; le registre HLR du réseau R1 répond en envoyant le profil de l'abonné MA dans des messages MAP INSERT_SUBSCRIBER_DATA req (3) et (6) encapsulés dans des messages TCAP de type CONTINUE. Le commutateur MSC/VLR les acquitte avec des confirmations « MAP INSERT_SUBSCRIBER_DATA_cnf » (4) et (7) dans des messages TCPA CONTINUE, jusqu'à ce que tout le profil de l'abonné A soit transmis. Puis le registre HLR envoie OK dans un message « UPDATE_LOCATION_cnf » encapsulé dans un message « TCAP END ». L'abonné MA est enregistré dans le registre VLR du réseau visité VR2 et il peut communiquer.
- le système de pilotage SOR décide de bloquer le dialogue, pour que le mobile choisisse un autre réseau que le réseau VR2 visité. Il envoie immédiatement son propre message UPDATE_LOCATION_cnf (5) avec un refus, donc plusieurs secondes avant le message « UPDATE_LOCATION_cnf » du registre HLR qui serait le message OK. Les messages « INSERT SUBSCRIBER DATA req » arrivant ensuite ou le vrai « UPDATE_LOCATIOM_cnf » du HLR arriveront dans un contexte déjà fermé du commutateur MSC/VLR. Le registre HLR ne recevra pas de confirmation aux INSERT_SUBSRIBER_DATA_req envoyés (s'il va vite) avant le refus envoyé par la plateforme SOR.

Le système de contre-mesure SCM selon l'invention reçoit un message « UPDATE_LOCATION_cnf » de refus (5) contenant le code non standard 35 ou 36. Comme il est installé en coupure, il ne retransmet pas le message au réseau visité VR2 (VPLMN) qui répond donc normalement aux messages INSERT_SUBSCRIBER_DATA et reçoit bien la confirmation OK UPDATE_LOCATION_cnf.

Contrairement aux systèmes de contre-mesure connus, le système de contre-mesure selon l'invention ne réessaye pas des messages UPDATE LOCATION jusqu'à ce qu'ils soient acceptés, ce qui serait contraire aux prescriptions de l'Association des Opérateurs de GSM-GSMa.

En résumé, le système de contre-mesure SCM est un filtre technique éliminant les messages ayant des codes d'erreur non standards.

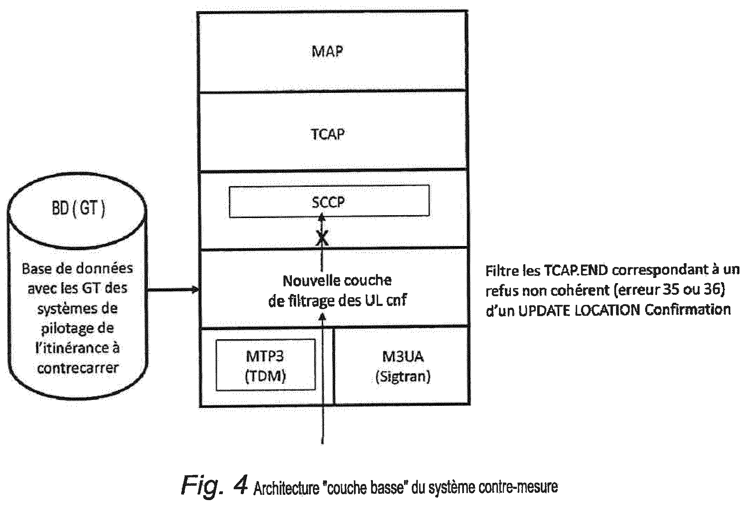

De façon plus détaillée, le système SCM selon l'invention comporte une couche de protocole non standard entre la couche réseau SCCP et la couche réseau MTP3 ou M3UA (SIGTRAN) comme représenté sur la figure 4. Elle s'insère entre la couche réseau de Points Sémaphore qui est la couche MTP3 ou M3UA suivant que le système de contre-mesure est relié en TDM ou en SIGTAN, et la couche SCCP du réseau des appellations globales GT.

Cette couche de protocole a sa propre base de données BD(GT) avec les listes des appellations globales GT des systèmes de pilotage de l'itinérance qu'il doit contrecarrer. L'installation de l'invention dans un système existant est très simple car les interfaces entre leurs différentes couches sont documentées par les différents fournisseurs de « pile de protocole » SS7.

Un exemple de dialogue est donné en annexe à la description.

On voit dans la trace ci-dessus le refus (un « return error ») d'un message UPDATE LOCATION par le système de pilotage de l'itinérance SOR. Grace au système de contre-mesure SCM selon l'invention, la procédure continue. Et à la fin de la procédure, le registre HLR envoie au réseau visité VPLM un message « UPDATE LOCATION cnf » sans erreur dans un « composant TCAP de type « return Result Last » contenu dans un message « TCAP END ».

Il faut noter que les messages « UPDATE LOCATION Cnf » reçus dans un composant TCAP END ne contiennent pas de code opération identifiant l'opération UPDATE LOCATION et le code d'erreur 35 le plus utilisé pour le pilotage de l'itinérance est un code d'erreur standard du protocole MAP (norme 3GPP 29.002). Par contre un autre code d'erreur, 36, moins fréquemment utilisé par les fournisseurs de systèmes de pilotage de l'itinérance est standard et peut être utilisé dans les réponses d'autres primitives MAP.

Suivant une première réalisation très simple, applicable pour contrecarrer le pilotage d'itinérance par code d'erreur 35, la couche intermédiaire rejette tout message de réponse dans un composant TCAP END avec un code 35 car ce code n'est utilisé en pratique que pour le pilotage de l'itinérance.

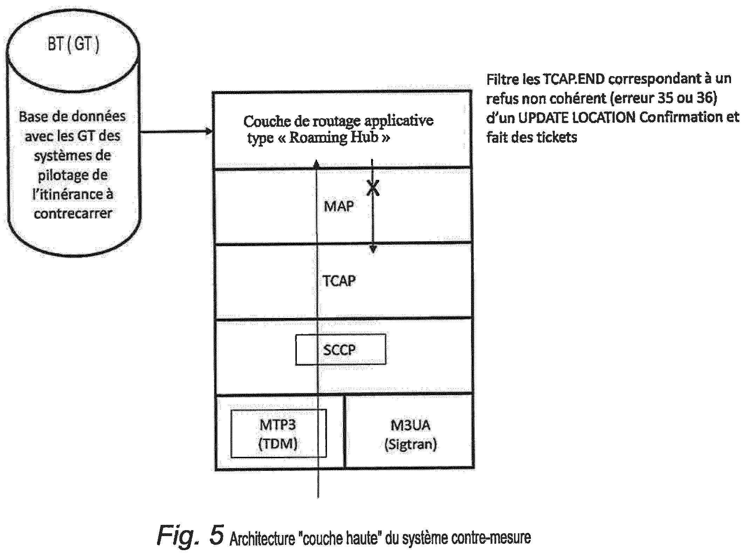

Pour le pilotage de l'itinérance utilisant le code d'erreur 35, la réalisation de la contre-mesure est plus sophistiquée puisque le système de contre-mesure doit mémoriser l'identité de la transaction TCAP qu'il voit passer dans le composant TCAP BEGIN ainsi que le code opération. Quand il voit passer un composant TCAP END avec l'erreur 36, il analyse le contexte à partir de l'identité de la transaction TCAP et seulement s'il s'agit d'un message UPDATE LOCATION, il rejette le message comme illustré sur la figure 5. Dans ce cas le système de contre-mesure SCM est au niveau supérieur. Le système est facilement réalisé dans un système d'itinérance virtuelle (« Roaming Hub » en anglais) qui fait une analyse des transactions TCAP au niveau applicatif et les renvoie après modification éventuelle de l'adressage. Cette réalisation permet aussi de faire des relevés statistiques très utiles pour montrer l'efficacité de la contre-mesure.

Les codes d'erreur légaux du standard ETSI (version TS 29.002 version 11.4.0 (2012-10 release 11) page 339, pour le message « UPDATE LOCATION » sont parfaitement clairs pour « user error » (erreur), page 357

| | | | |
|---|---|---|---|
| - | system Failure | 34 | erreur système |
| - | data Missing | 35 | paramètres manquants |
| - | unexpected Data Value | 36 | valeurs incorrectes |
| - | unknown Subscriber | 1 | abonné inconnu |
| - | roaming Not Allowed | 8 | roaming interdit |

Or, le message UPDATE LOCATION avait tous les bons paramètres et les valeurs étaient correctes, La couche intermédiaire décide donc qu'elle a raison et traite donc comme une erreur du HLR distant le refus 35 ou 36. Ce traitement est normal.

Par contre pour un système de pilotage de l'itinérance qui utiliserait les codes 34, 1 ou 8, la couche intermédiaire laisserait passer les messages et l'enregistrement de l'abonné échouerait ; c'est le cas du code d'erreur 8 correspondant justement à un refus légal d'itinérance par exemple pour un abonné qui n'a pas l'itinérance dans le réseau visité VPLMN. Ainsi, pour les codes d'erreur 35 et 36 utilisés par la plupart des systèmes de pilotage de l'itinérance, le système de contre-mesure selon l'invention est efficace et justifié par une correction automatique d'une erreur de protocole.

L'ajout de la contre-mesure à un pilote d'itinérance virtuel (« Roaming Hub ») ou à un registre GLR (« Gateway Location Register ») est donc extrêmement simple et n'a pas d'impact sur le reste. Cette contre-mesure est efficace vis à vis d'un système de pilotage « passif ». Si celui-ci voyait les INSERT SUBSCRIBER DATA continuer à passer bien qu'il ait envoyé un refus d'UPDATE LOCATION, et en envoie un autre (répétition), le système de contre mesure objet de l'invention, les filtrerait aussi et cette tentative serait vaine.

Le filtrage du message TCAP END contenant un message « MAP UPDATE LOCATION cnf » avec un code d'erreur incohérent pour le pilotage de l'itinérance doit obligatoirement se faire *avant la couche* TCAP. Au-dessus, la transaction serait fermée et on ne recevrait pas les vrais messages émis par le registre HLR. Dans un mode de réalisation cela est fait avant la couche SCCP (figure 4), mais pourrait se faire aussi au dessus, avant le message TCAP.

### Annexe à la description

### Exemple de dialogue selon l'invention

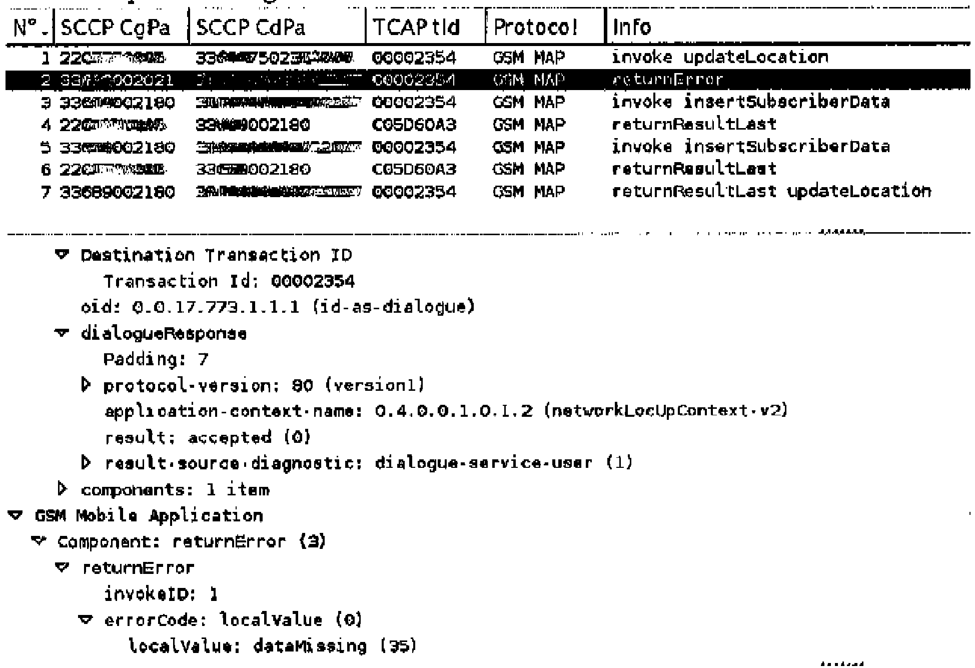

### GLOSSAIRE

- GLR: « Gateway Location Register » : Système en coupure des liaisons internationales mémorisant la présence de visiteurs pour minimiser le trafic de signalisation et aussi garder les visiteurs.
- HLR :: « Home Location Register » : Registre de Localisation des abonnés (mobiles) appartenant à un réseau.
- HPMN :: « Home Public Mobile Network », le réseau de l'abonné.
- IMSI :: « International Mobile Subscriber Identity » : numéro d'abonné dans la carte SIM ; indépendant du numéro MSISDN de l'abonné. Il est reçu dans un SMS-MT.
- GT :: « Global Title » (Appellation globale) pour un équipement, par exemple +33689123456 Orange France.
- SGSN: « Servicing GPRS Service Node » (fonction d'un MME en 4G) : système auquel est attaché un mobile pour le service de données par paquet.
- MAP: « Mobile Application Part », standard GSM pour la transmis sion de signalisation et messages.
- MSC/VLR :: « Message Switching Center » : Commutateur des réseaux de mobiles fournissant le service « circuit ». Visited Location Register intégré au MSC.
- MSISDN :: Numéro habituel d'un mobile.
- TCAP :: « TransAction Capability Protocol », protocole faisant partie de la pile SS7 et comprenant les messages BEGIN, CONTINUE, END qui contiennent les messages MAP utilisés dans la transaction de mise à jour de localisation. Pour une transaction donnée, les messages BEGIN, CONTINUE et END contiennent une « Transaction-ID » d'origine et de destination qui permettent d'apairer les différents messages TCAP d'une transaction.
- VPMN :: « Visited Public mobile network » Réseau de l'opérateur visité.
- SS7 :: « Signalling System N°7 », réseau de signalisation mondial pour la. transmission de messages surtout entre opérateurs de mobiles.
- SCCP :: Couche « réseau » du protocole SS7 pour le routage global par les adresses GT. Il transporte les messages TCAP eux-mêmes transportant les messages MAP.
- MTP3 et M3UA: : Couches réseaux pour le routage par des Points Sémaphore ; transporte le SCCP.

## Revendications

1. Système de contre-mesure sans répétition des messages Update Location aux systèmes de pilotage des réseaux visités par les mobiles, basés sur l'utilisation d'une plateforme de pilotage d'itinérance (SOR) installée en parallèle au registre Home Location Register, HLR, et recevant le même message Update Location d'un mobile (MA) du réseau (R1) en itinérance dans une réseau visité, RV_{N}, qui est reçu par le HLR, pour diriger un mobile en itinérance (MA) vers un réseau partenaire (RV₁) choisi par l'opérateur du réseau (R1) du mobile (MA) en itinérance,
- la-dite plateforme de pilotage d'itinérance (SOR) retournant un message d'erreur vers le réseau visité, RV_{N}, en réponse aux messages Update Location contenant une demande de profil du mobile (MA) en itinérance, émis par RV_{N}, le système comprenant:
- une plateforme de contre-mesure (SCM) installée à l'entrée du réseau visité RV_{N} en coupure des liaisons internationales SS7 de ce réseau, la-dite plateforme de contre-mesure (SCM) étant adaptée en ce qu'elle ne répète pas des messages Update Location émis par RV_{N} et qui seraient refusés par la-dite plateforme de pilotage d'itinérance (SOR), et en ce qu'elle intercepte les messages d'entrée, en analyse les caractéristiques et ne transmet pas vers RV_{N} les messages de réponse provenant du réseau (R1) contenant un refus avec des codes d'erreur incohérents vis-à-vis d'un message Update Location envoyé qui était correct,
- le dialogue entre le réseau visité et le réseau du mobile se poursuivant, le registre HLR du réseau (R1) du mobile (MA) répondant par l'envoi du profil du mobile (MA) qui sera inscrit dans le registre Visited Location Register, VLR, du réseau visité RV_{N}.

2. Système de contre-mesure selon la revendication 1,
**caractérisé en ce que**
la plateforme de contre-mesure comporte une couche de logiciel de contre-mesure entre sa couche SCCP et sa couche réseau MTP3 ou, M3UA, ou encore entre la couche SCCP et la couche TCAP qui est adaptée **en ce qu'**elle filtre les messages TCAP END UPDATE LOCATION ayant des codes d'erreur mis par la-dite plateforme de pilotage d'itinérance (SOR) pour refuser l'enregistrement de ce message dans le réseau visité.

3. Système de contre-mesure selon la revendication 1,
**caractérisé en ce que**
le système de contre-mesure comporte une base de données contenant les appellations globales (GT) des plateformes de pilotage d'itinérance (SOR) à contrecarrer que la-dite plateforme de contre-mesure est adaptée à utiliser pour décider ou non de contrecarrer le choix fait par un système de pilotage d'itinérance .

## Patentansprüche

1. Gegenmaßnahmensystem ohne Wiederholung der Update Location Nachrichten für Systeme zur Steuerung von durch Handys besuchten Funknetzen, die auf der Verwendung einer Roaming-Steuerungsplattform (SOR) basieren, welche parallel zu dem Register Home Location Register, HLR, angeordnet ist und die gleiche Update Location Nachricht von einem Roaming-Handy (MA) des Funknetzes (R1) in einem besuchten Funknetz, RV_{N}, der durch das HLR empfangen wird, empfängt, um ein Roaming-Handy (MA) auf einen Partnerfunknetz (RV₁), der von dem Betreiber des Netzes (R1) des Roaming-Handys (MA) ausgewählt ist, umzuleiten,
- wobei die Roaming-Steuerungsplattform (SOR) eine Fehlermeldung an dem besuchten Netz, RV_{N}, als Antwort auf die Update Location Nachrichten, die eine Profilanforderung des Roaming-Handys (MA) enthalten und durch RV_{N} gesandt sind, zurückgibt,
wobei das System umfasst:
- eine Gegenmaßnahmenplattform (SCM), die am Eingang des besuchten Netzes RV_{N} als Unterbrechung der internationalen Verbindungen SS7 dieses Netzes angeordnet ist,
wobei die Gegenmaßnahmenplattform (SCM) so ausgebildet ist, dass sie Update Location Nachrichten, die durch RV_{N} gesandt sind und durch die Roaming-Steuerungsplattform (SOR) abgelehnt wären, nicht wiederholt, und dass sie Eingangsnachrichten abfängt, deren Merkmale analysiert und die Antwortnachrichten, welche aus dem Netz (R1) herkommen und eine Ablehnung mit inkohärenten Fehlercodes gegenüber einer gesandten Update Location Nachricht, welche richtig war, enthalten, an RV_{N} nicht übermittelt,
- wobei der Dialog zwischen dem besuchten Netz und dem Mobilnetz weitergeht, wobei das HLR Register des Netzes (R1) des Handys (MA) mit der Sendung des Profils des Handys (MA), das in dem Visited Location Register Register, VLR, des besuchten Netzes RVN eingetragen werden wird, antwortet.

2. Gegenmaßnahmensystem nach Anspruch 1,
**dadurch gekennzeichnet, dass**
die Gegenmaßnahmenplattform eine Gegenmaßnahme-Software-Ebene zwischen ihrer SCCP Ebene und ihrer MTP3 oder M3UA Netz-Ebene, oder noch zwischen der SCCP Ebene und der TCAP Ebene, welche so ausgebildet ist, dass sie die TCAP END UPDATE LOCATION Nachrichten filtert, welche Fehlercodes aufweisen, die durch die Roaming-Steuerungsplattform (SOR) gesetzt wurden, um die Aufzeichnung dieser Nachricht in dem besuchten Netz abzulehnen, umfasst.

3. Gegenmaßnahmensystem nach Anspruch 1,
**dadurch gekennzeichnet, dass**
das Gegenmaßnahmensystem eine Datenbank umfasst, welche die globalen Bezeichnungen (GT) der entgegenzuwirkenden Roaming-Steuerungsplattforme (SOR), wobei die Gegenmaßnahmenplattform dazu ausgebildet ist, sie zu verwenden, um so entscheiden, ob der durch das Roaming-Steuerungssystem getroffene Wahl entgegenzuwirken ist oder nicht.

## Claims

1. Countermeasure system which does not repeat Update Location messages to steering systems of networks visited by mobile phones, which systems are based on the use of a steering of roaming platform (SOR) which is installed in parallel with the Home Location Register, HLR, and receives the same Update Location message from a mobile phone (MA) of the network (R1) roaming in a visited network, RV_{N}, as that which is received by the HLR, in order to direct a roaming mobile phone (MA) towards a partner network (RV₁) chosen by the network operator (R1) of the roaming mobile phone (MA),
- said steering of roaming platform (SOR) returning an error message to the visited network, RV_{N}, in response to Update Location messages which contain a request for the profile of the roaming mobile phone (MA) and are emitted by RV_{N},
the system comprising:
- a countermeasure platform (SCM) installed at the entrance to the visited network RV_{N} in order to cut international connections SS7 of said network, said countermeasure platform (SCM) being designed so as to not repeat Update Location messages which are emitted by RV_{N} and would be refused by said steering of roaming platform (SOR), and so as to intercept the input messages in order to analyse the characteristics, and not transmit towards RV_{N} the response messages originating from the network (R1) and containing a refusal comprising error codes that are incoherent with respect to a sent Update Location message which was correct,
- the dialogue between the visited network and the mobile network continuing, the HLR register of the network (R1) of the mobile phone (MA) responding by sending the profile of the mobile phone (MA), which profile will be registered in the Visited Location Register, VLR, of the visited network RV_{N}.

2. Countermeasure system according to claim 1, **characterised in that** the countermeasure platform comprises a countermeasure software layer between the SCCP layer thereof and the network MTP3 or M3UA layer thereof, or even between the SCCP layer and the TCAP layer which is designed so as to filter the TCAP END UPDATE LOCATION messages which have error codes set by said steering of roaming platform (SOR) in order to refuse said message being registered in the visited network.

3. Countermeasure system according to claim 1, **characterised in that** the countermeasure system comprises a database containing global titles (GT) of steering of roaming platforms (SOR) for opposing said countermeasure platform being suitable for use to decide to oppose or not oppose the choice made by a steering of roaming system.
